## Europäisches Patentamt

(19) **European Patent Office**

Office européen des brevets

(11) Publication number: **0 216 588**
**B1**

(12) **EUROPEAN PATENT SPECIFICATION**

(45) Date of publication of the patent specification:
**11.07.90**

(51) Int. Cl.⁵: **B60C 1/00**

(21) Application number: **86307091.8**

(22) Date of filing: **15.09.86**

(54) Pneumatic tire.

(30) Priority: **13.09.85 JP 203181/85**

(43) Date of publication of application:
**01.04.87 Bulletin 87/14**

(45) Publication of the grant of the patent:
**11.07.90 Bulletin 90/28**

(84) Designated Contracting States:
**DE FR GB**

(56) References cited:
**DE-A- 3 222 957**
**DE-A- 3 432 148**
**GB-A- 1 603 847**
**GB-A- 1 604 393**
**GB-A- 2 103 625**
**US-A- 4 398 582**

**PATENT ABSTRACTS OF JAPAN, vol. 9,**
**no. 77 (M-369)[1800], 6th April 1985; & JP-A-59206209**

(73) Proprietor: **Bridgestone Corporation, 10-1,**
**Kyobashi 1-Chome Chuo-Ku, Tokyo 104(JP)**

(72) Inventor: **Yuto, Kazuaki, 29-1, Kumegawa-cho 5-chome,**
**Higashimurayama City Tokyo(JP)**

(74) Representative: **Whalley, Kevin et al, MARKS &**
**CLERK 57/60 Lincoln's Inn Fields, London**
**WC2A 3LS(GB)**

ACTORUM AG

## Description

This invention relates to a pneumatic tire having a good all-weather running performance.

More particularly the invention relates to a pneumatic tire applicable to radial and bias tires for passenger vehicles and also to motorcycle tires, which is not only able to run on dry roads in fine weather, wet roads in rain, and roads covered with ice and/or snow (abbreviated as "ice and snow road" hereinafter), but is also such that under the conditions of dry roads the frictional force between the tread portion and the road surface is so large that it is possible to run easily or at high speed on curved roads, at high speed on straight roads, and in short lap times on circuit roads and is additionally able to run easily or at high speed even on wet roads.

There have heretofore been known various tires having good running performances. For instance, Japanese Patent Laid-Open Nos. 55-60539 and 55-86827 each disclose rubber compositions for tread rubbers having an improved tread gripping force against wet road surfaces. There are also known so-called snow tires and studless tires for running on ice and snow roads. For instance, Japanese Patent Laid-Open No. 59-206209 discloses a pneumatic tire having an increased gripping force on ice and snow road surfaces by utilizing a tire tread of a certain rubber composition.

In the tire tread portion of conventional tires having good running performances, it is required that the loss of tread rubber near room temperature is made large in order to ensure a good tread gripping force against the road surface, which has hitherto been achieved by using polymers having a high glass transition temperature, such as styrene-butadiene rubber having a large content of bound styrene, or compounding large amounts of carbon and oil with the rubber composition. However, such tread rubbers have the problem that it is difficult to run on ice and snow road surfaces since they harden at low temperature and consequently a sufficient frictional force can not be obtained.

On the other hand, in so-called snow tires and studless tires for the purpose of easily running on ice and snow roads, there are generally used tread rubbers which remain soft even at low temperature. Therefore, satisfactory performances can be obtained on ice and snow roads, but there is a problem that the hardness of the tread rubber tends to be excessively lowered near room temperature, and as a result a sufficient running performance can not be obtained.

The present invention aims to overcome or at least mitigate the above-mentioned disadvantages of the known tires, and to provide a pneumatic tire capable of easily running even on ice and snow roads, in other words having a good all-weather running performance.

The present inventor has made various studies with respect to the material of the tire tread portion and has found that a pneumatic tire having a good all-weather running performance can be obtained by selecting a rubber composition capable of separately and freely controlling the viscoelastic property of the tread rubber near room temperature, which is required for obtaining a large frictional force between the tread rubber and the road surface near room temperature, and the elastic property of the tread rubber at low temperature such as -20°C, and as a result the invention has been accomplished.

That is, according to the invention, there is provided a pneumatic tire having a good all-weather running performance, which utilizes in the tire tread a vulcanized rubber composition containing 2-30 parts by weight of a low-temperature type softener, based on 100 parts by weight of a rubber blend of 10-90 parts by weight of at least one diene rubber having a glass transition temperature of not more than -65°C (abbreviated as "component (A)" hereinafter) and 90-10 parts by weight of at least one diene rubber having a glass transition temperature of not less than -55°C (abbreviated as "component (B)" hereinafter), the vulcanized rubber having an elastic modulus of not more than 50 kg/cm² at -20°C under elongation of 100% and a loss tangent (tan δ) of not less than 0.3.

As examples of diene rubbers having a glass transition temperature of not more than -65°C to be used as the above component (A), mention may be made of polybutadiene rubber (having a high content of vinyl bonds or a low content of cis form bonds), styrene-butadiene rubber having a small content of bound styrene, ethyene-butadiene rubber, propylene-butadiene rubber, butadiene-isoprene rubber, and propylene-isoprene rubber. The use of diene rubbers having a glass transition temperature of not more than -70°C is preferable. When diene rubbers having a glass transition temperature of more than -65°C are used as the component (A), it becomes difficult to obtain the desired elastic modulus at low temperature.

As examples of diene rubbers having a glass transition temperature of not less than -55°C, mention may be made of styrene-butadiene rubber having a large content of bound styrene, α-methylstyrene-butadiene rubber, polybutadiene rubber having a large content of vinyl bonds, and styrene-butadiene rubber having a small content of bound styrene but a large content of vinyl bonds. When diene rubbers having a glass transition temperature of less than -55°C are used as the component (B), it becomes difficult to obtain the desired high running performance.

In order to maintain the viscoelastic property near room temperature and the elastic property at low temperature of tread rubber within the ranges defined in the invention, respectively, it is necessary to compound an ester type low-temperature softener with the mixed rubber blend of the components (A) and (B). As suitable ester type low-temperature softeners, mention may be made of derivatives of phthalic acid such as phthalic diester; fatty acid type monobasic acid esters such as derivatives of oleic acid; and fatty acid type dibasic acid esters such as derivatives of adipic acid, azelaic acid, sebacic acid, and phosphoric acid. Among these, the derivatives of oleic acid such as butyl oleate, octyl oleate, decyl oleate, fatty acid octyl of tall oil, oleyl oleate, ethylene glycol oleic diester, 1,4-butanediol oleic diester, 1,6-hexanediol oleic diester, 2-ethylhexyl oleate, dodecyl oleate, decyl myristoleate and oleyl myristoleate are most preferable, and the use of octyl oleate is particularly preferred.

According to the invention, the compounding amount of such an ester type low-temperature softener is preferably within a range of 2-30 parts by weight based on 100 parts by weight of the rubber blend. This is because when the amount of ester type softener is less than 2 parts by weight, it is not possible to obtain a sufficient running performance on ice and snow roads, while when said amount exceeds 30 parts by weight, the elastic modulus becomes so low that not only it is not possible to obtain a sufficient high running performance but also it is difficult to obtain sufficient wear resistance of the tread rubber. Further, such a compounding amount is more preferably within a range of 3-15 parts by weight, which range is selected to thereby maintain the balance between the high running performance and the running performance on ice and snow roads very well.

According to the invention, as mentioned above, it is also required that the tread rubber obtained by compounding an ester type low-temperature softener with a rubber blend of the above components (A) and (B) and vulcanizing the resulting compound has an elastic modulus of not more than 4903 kN/m² (50 kg/cm²) at -20°C under elongation of 100% and a loss tangent (tan δ) of not less than 0.3. This is because when the elastic modulus at -20°C under elongation of 100% exceeds 4903 kN/m² (50 kg/cm²), it is difficult to obtain the desired running performance on ice and snow roads. Such an elastic modulus is preferably not more than 4413 kN/m² (45 kg/cm²). Also, when tan δ at 30°C is less than 0.3, it is difficult to obtain the desired high running performance. Such a tan δ is preferably not less than 0.35.

Further, the storage elastic modulus E' is preferably not less than 10787 kN/m² (110 kg/cm²), more preferably not less than 12749 kN/m² (130 kg/cm²). When E' is less than 10787 kN/m² (110 kg/cm²), it may be difficult to obtain a sufficient high running performance.

According to the invention, in addition to the components (A) and (B), as rubber components there can be used butyl rubber or halogenated butyl rubber such as a combination of chlorobutyl and bromobutyl rubbers in order to improve the brakability on wet roads. The amount of butyl rubber or halogenated butyl rubber used is 8-30 parts by weight, preferably 10-20 parts by weight. In this case, the compounding amounts of components (A) and (B) are 10-82 parts by weight and 82-10 parts by weight, respectively. By defining such ranges, it is possible to prevent the deterioration of the wear resistance of the tread rubber and to improve the brakability on wet roads.

Sulfur as vulcanizing agent, a vulcanization accelerator, acceleration aid, antioxidant, softener, or other additives may be suitably compounded with the rubber composition utilized according to the invention.

The invention will be further described with reference to the following illustrative Examples.

Examples 1-7, Comparative Examples 1-4

With respect to rubber compositions having a compounding recipe (parts by weight) as shown in the following Table 1, tan δ at 30°C and E' at 30°C were measured by means of a spectrometer, and elastic modulus under elongation of 100% was measured by means of a tensilometer prior to the evaluation of tire. Then, each of such rubber compositions was used as a tread rubber to produce 11 tires having a size 185/70 SR14. The brakability on wet road, driving stability on dry road and brakability on snow road for each tire were evaluated to obtain results as shown in Table 1.

In Table 1, Comparative Example 1 corresponds to a conventional tire having a high running performance. Comparative Example 2 corresponds to a conventional snow tire. The tire using a tread rubber having a high running performance, for a so-called summer tire, in Comparative Example 1 was made a control tire to define the performance of each tire in Table 1 by an index on the basis of the control.

The methods of measuring the above physical properties and evaluating the above performances were as follows.

(a) Glass transition temperature (Tg)

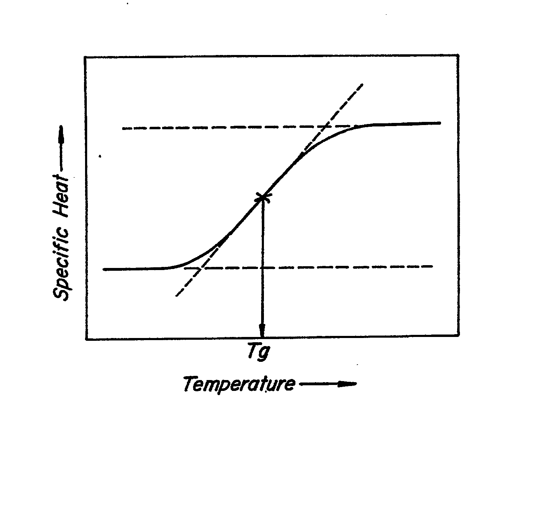

A thermogram was recorded at a temperature increasing rate of 20°C/min by means of a DSC (differential scanning calorimeter) to make the temperature of the center point of the tangent line as shown in the accompanying drawing a glass transition temperature (Tg). The drawing is a graph of the relation between temperature and specific heat, which is used to obtain the glass transition temperature (Tg).

(b) Elastic modulus at -20°C under elongation of 100%

The elastic modulus at -20°C under elongation of 100% was measured in a constant temperature bath having a temperature of -20°C (which was precooled for 10 minutes) according to JIS K6301 tensile test.

The curing condition of the samples was selected so that they might be vulcanized for 1.2 times as long as the time for the torque to attain a maximum value in a rheometer.

(c) Storage elastic modulus E' and loss tangent tan δ

E' and tan δ were measured by means of a viscoelastic spectrometer made by Iwamoto Seisakusho Co., Ltd. at a frequency of 50 cps under a condition that a dynamic strain is 1% under a static elongation strain of 5%. In this case, a strip-like sample having a length between checks of 20 mm, a width of 5 mm and a thickness of 2 mm was prepared from the rubber composition. The curing conditions were the same as in (a) above.

(d) Brakability on wet roads

A vehicle provided with the test tire was run on a wet asphalt road at a speed of 40 km/hr, 70 km/hr or 100 km/hr and thereafter subjected to rapid braking at the above speed. Then, the running distance required for completely stopping the vehicle was defined by an index on the basis that the tire of Comparative Example 1 is 100. The larger the index value, the better the brakability on wet roads.

(e) Driving stability on dry roads

A vehicle provided with the test tire was run on a circuit road consisting of straight road, curved road and bank in fine weather to measure a lap time. The resulting lap times were represented by an index on the basis that the lap time of Comparative Example 1 is 100. The larger the index value, the better the driving stability on dry roads.

(f) Brakability on snow roads

With respect to the braking performance on snow roads, a vehicle provided with the test tire was run on a snow road at a speed of 20 km/h, 30 km/h or 40 km/h and thereafter subjected to rapid braking at the above speed. Then, the running distance required for completely stopping the vehicle was defined by an index on the basis that the tire of Comparative Example 1 is 100.

Table 1(a)-1

| | Comparative Example 1 | Comparative Example 2 | Comparative Example 3 | Example 1 | Comparative Example 4 | Example 2 |
|---|---|---|---|---|---|---|
| Polymer A (Tg is not more than -65°C) | | | | | | |
| Polybutadiene rubber *1 | - | 30 | 40 | 40 | 40 | 30 |
| Natural rubber (or polyisoprene rubber)*10 | - | 20 | - | - | - | 20 |
| Solution polymerized SBR *9 | - | - | - | - | - | - |
| Emulsion polymerized SBR *2 | 40 | 50 | - | - | - | - |
| Polymer B (Tg is not less than -55°C) | | | | | | |
| Emulsion polymerized SBR *3a | 60 | - | 60 | 60 | 60 | 50 |
| Emulsion polymerized SBR *3b | - | - | - | - | - | - |
| Chlorobutyl rubber *4 | - | - | - | - | - | - |
| Carbon black N339 | 90 | - | 90 | - | - | - |
| N220 | - | - | - | - | - | - |
| N110 | - | 65 | - | 65 | 65 | 65 |
| Aromatic oil | 50 | 15 | 50 | 15 | 10 | 15 |
| Ester type low-temperature softener | | | | | | |
| Butyl oleate ester | - | 5 | - | 5 | 10 | 5 |

EP 0 216 588 B1

Table 1(a)-2

| | Example 3 | Example 4 | Example 5 | Example 6 | Example 7 |
|---|---|---|---|---|---|
| Polymer A (Tg is not more than -65°C) | | | | | |
|    Polybutadiene rubber *1 | - | 15 | 20 | 15 | 20 |
|    Natural rubber (or polyisoprene rubber)*10 | - | 35 | 40 | 35 | - |
|    Solution polymerized SBR *9 | 50 | - | - | - | - |
|    Emulsion polymerized SBR *2 | - | - | - | - | 20 |
| Polymer B (Tg is not less than -55°C) | | | | | |
|    Emulsion polymerized SBR *3a | 50 | 50 | - | 35 | 40 |
|    Emulsion polymerized SBR *3b | - | - | 40 | - | - |
| Chlorobutyl rubber *4 | - | - | - | 15 | 20 |
| Carbon black N339 | - | - | - | - | - |
|       N220 | - | 80 | 80 | - | - |
|       N110 | 75 | - | - | 65 | 75 |
| Aromatic oil | 20 | 30 | 30 | 15 | 25 |
| Ester type low-temperature softener | | | | | |
|    Butyl oleate ester | 5 | 5 | 5 | 5 | 10 |

EP 0 216 588 B1

Table 1(b)-1

| | | Comparative Example 1 | Comparative Example 2 | Comparative Example 3 | Example 1 | Comparative Example 4 | Example 2 |
|---|---|---|---|---|---|---|---|
| Stearic acid | | 1 | 1 | 1 | 1 | 1 | 1 |
| Zinc oxide | | 3 | 3 | 3 | 3 | 3 | 3 |
| Antioxidant IPPD *5 | | 1 | 1 | 1 | 1 | 1 | 1 |
| Vulcanization accelerator | DPG *6 | 0.4 | 0.4 | 0.4 | 0.4 | 0.4 | 0.3 |
| | DM *7 | 0.4 | 0.4 | 0.4 | 0.4 | 0.4 | 0.4 |
| | NOBS *8 | 0.6 | 0.6 | 0.6 | 0.4 | 0.4 | 0.4 |
| Sulfur | | 1.8 | 1.8 | 1.8 | 1.8 | 1.8 | 1.8 |
| Physical properties of rubber | Elastic modulus at −20°C under elongation of 100% $(kg/cm^2)$ | 85 | 25 | 55 | 40 | 35 | 42 |
| | $(kN/m^2)$ | 8336 | 2452 | 5394 | 3923 | 3432 | 4119 |
| | +30°C tan δ | 0.40 | 0.28 | 0.33 | 0.33 | 0.29 | 0.34 |
| | +30°C E′ $(kg/cm^2)$ | 120 | 108 | 110 | 110 | 105 | 110 |
| | $(kN/m^2)$ | 11768 | 10591 | 10787 | 10787 | 10297 | 10787 |
| Tire performances | Brakability on wet road | 100 | 80 | 95 | 95 | 89 | 96 |
| | Driving stability on dry road | 100 | 85 | 95 | 95 | 88 | 96 |
| | Brakability on snow road | 100 | 125 | 110 | 115 | 120 | 114 |

Table 1(b)-2

| | | | Example 3 | Example 4 | Example 5 | Example 6 | Example 7 |
|---|---|---|---|---|---|---|---|
| Stearic acid | | | 1 | 1 | 1 | 1 | 1 |
| Zinc oxide | | | 3 | 3 | 3 | 3 | 3 |
| Antioxidant IPPD *5 | | | 1 | 1 | 1 | 1 | 1 |
| Vulcanization accelerator | | DPG *6 | 0.2 | 0.2 | 0.2 | 0.2 | 0.2 |
| | | DM *7 | 0.3 | 0.3 | 0.3 | 0.3 | 0.3 |
| | | NOBS *8 | 0.4 | 0.4 | 0.4 | 0.4 | 0.4 |
| Sulfur | | | 1.8 | 1.8 | 1.8 | 1.8 | 1.8 |
| Physical properties of rubber | Elastic modulus at −20°C under elongation of 100% | $(kg/cm^2)$ | 47 | 48 | 47 | 40 | 45 |
| | | $(kN/m^2)$ | 4609 | 4707 | 4609 | 3923 | 4413 |
| | +30°C tan δ | | 0.40 | 0.38 | 0.38 | 0.36 | 0.42 |
| | +30°C E′ | $(kg/cm^2)$ | 140 | 135 | 130 | 125 | 135 |
| | | $(kN/m^2)$ | 13729 | 13239 | 12749 | 12258 | 13239 |
| Tire performances | Brakability on wet road | | 98 | 100 | 98 | 99 | 102 |
| | Driving stability on dry road | | 100 | 102 | 101 | 101 | 102 |
| | Brakability on snow road | | 112 | 110 | 108 | 114 | 112 |

In Table 1

*1 : JSR BRO 1 (Tg=-119°C)
*2 : bound styrene 23.5% (Tg=-63°C)
*3a: bound styrene 35% (Tg=-52°C)
*3b: bound styrene 45% (Tg=-38°C)
*4 : trade name HT1068, made by Exxon Chemical Company
*5 : N-phenyl-N'-isopropyl-p-phenylenediamine
*6 : diphenyl guanidine
*7 : dibenzothiazyldisulfide
*8 : N-oxydiethylene-2-benzothiazolylsulfeneamide
*9 : bound styrene 5% (Tg=-89°C)
*10: natural rubber (Tg=-75°C)

In Table 1, the emulsion polymerized SBR is a third rubber component.

As mentioned above, in the tire according to the invention, there is selected a rubber composition capable of separately and freely controlling the viscoelastic property of the tread rubber near room temperature and the elastic property of the tread rubber at low temperature such as -20°C, whereby it is possible to obtain a pneumatic tire having a good all-weather running performance which also has excellent brakability on snow roads as shown in Table 1.

## Claims

1. A pneumatic tire, characterized in that the tire tread comprises a vulcanized rubber composition containing 2-30 parts by weight of a low-temperature ester type softener, based on 100 parts by weight of a rubber blend which comprises 10-90 parts by weight of at least one diene rubber having a glass transition temperature of not more than -65°C and 90-10 parts by weight of at least one diene rubber having a glass transition temperature of not less than -55°C, the vulcanized rubber having an elastic modulus of not more than 4903 kN/m² (50 kg/cm²) at -20°C under elongation of 100% and a loss tangent (tan δ) of not less than 0.3.

2. A pneumatic tire as claimed in claim 1, characterized in that the vulcanized rubber has a storage elastic modulus E' of not less than 10787 kN/m² (110 kg/cm²).

3. A pneumatic tire as claimed in claim 1 or 2, characterized in that the said rubber blend comprises 10-82 parts by weight of at least one diene rubber having a glass transition temperature of not more than -65°C, 82-10 parts by weight of at least one diene rubber having a glass transition temperature of not less than -55°C, and 8-30 parts by weight of butyl rubber or halogenated butyl rubber.

4. A pneumatic tire as claimed in any of claims 1 to 3, characterized in that the vulcanized rubber composition contains the said ester type softener in an amount of 3-15 parts by weight based on 100 parts by weight of the said rubber blend.

## Patentansprüche

1. Luftreifen, gekennzeichnet durch eine Laufschicht in Form · einer vulkanisierten Kautschukmischung enthaltend 2 bis 30 Gew.-Teile eines Tieftemperatur-Weichmachers auf Esterbasis - bezogen auf 100 Gew.-Teile Kautschukmischung, enthaltend 10 bis 90 Gew.-Teile zumindest eines Dienkautschuks mit einer Glasübergangstemperatur von nicht mehr als -65°C und 90 bis 10 Gew.-Teilen zumindest eines Dienkautschuks mit einer Glasübergangstemperatur von nicht weniger als -55°C, wobei der vulkanisierte Gummi einen Elastizitätsmodul von nicht mehr als 4903 kN/m² (50 kg/cm²) bei -20°C und einer Dehnung von 100 % und einen Verlustwinkel (tan δ) von nicht weniger als 0,3 aufweist.

2. Luftreifen nach Anspruch 1, dadurch gekennzeichnet, daß der vulkanisierte Gummi einen Elastizitätsmodul E' von nicht weniger als 10 787 kN/m² (110 kg/cm²) aufweist.

3. Luftreifen nach Anspruch 1 oder 2, dadurch gekennzeichnet, daß die Kautschukmischung 10 bis 82 Gew.-Teile zumindest eines Dienkautschuks mit einer Glasübergangstemperatur von nicht mehr als -65°C, 82 bis 10 Gew.-Teile zumindest eines Dienkautschuks mit einer Glasübergangstemperatur von nicht weniger als -55°C und 8 bis 30 Gew.-Teile Butylkautschuk oder Halogenbutylkautschuk besteht.

4. Luftreifen nach einem der Ansprüche 1 bis 3, dadurch gekennzeichnet, daß der vulkanisierte Gummi den Ester-Weichmacher in einer Menge von 3 bis 15 Gew.-Teilen, bezogen auf 100 Gew.-Teile Kautschukmischung, enthält.

## Revendications

1. Bandage pneumatique, caractérisé en ce que la bande de roulement du pneumatique comprend une composition de caoutchouc vulcanisé contenant 2 à 30 parties en poids d'un plastifiant à basse température, de type ester, sur la base de 100 parties en poids d'un mélange de caoutchouc qui comprend 10 à 90 parties en poids d'au moins un caoutchouc de diène ayant une température de transition vitreuse non supérieure à –65°C, et 90 à 10 parties en poids d'au moins un caoutchouc de diène ayant une température de transition vitreuse non inférieure à –55°C, le caoutchouc vulcanisé ayant un module d'élasticité non supérieur à 4903 kN/m$^2$ (50 kg/cm$^2$) à –20°C sous un allongement de 100%, et une tangente de perte (tg δ) non inférieure à 0,3.

2. Bandage pneumatique tel que revendiqué à la revendication 1, caractérisé en ce que le caoutchouc vulcanisé a un module de magasinage élastique E′ non inférieur à 10 787 kN/m$^2$ (110 kg/cm$^2$).

3. Bandage pneumatique tel que revendiqué à la revendication 1 ou 2, caractérisé en ce que ledit mélange de caoutchouc comprend 10 à 82 parties en poids d'au moins un caoutchouc de diène ayant une température de transition vitreuse non supérieure à –65°C, 82 à 10 parties en poids d'au moins un caoutchouc de diène ayant une température de transition vitreuse non inférieure à –55°C, et 8 à 30 parties en poids de caoutchouc butyle ou de caoutchouc butyle halogéné.

4. Bandage pneumatique tel que revendiqué dans l'une quelconque des revendications 1 à 3, caractérisé en ce que la composition de caoutchouc vulcanisé contient ledit plastifiant de type ester, présent en une quantité de 3 à 15 parties en poids, sur la base de 100 parties en poids dudit mélange de caoutchouc.